(19) Europäisches Patentamt
European Patent Office
Office européen des brevets

(11) EP 2 572 770 B1

(12) **EUROPEAN PATENT SPECIFICATION**

(45) Date of publication and mention
of the grant of the patent:
**25.12.2013 Bulletin 2013/52**

(51) Int Cl.:
**B01D 46/24** (2006.01)

(21) Application number: **12182795.0**

(22) Date of filing: **03.09.2012**

(54) **Honeycomb catalyst body**

Wabenförmiger Katalysatorkörper

Corps de catalyseur en nid d'abeille

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2011 JP 2011193436**

(43) Date of publication of application:
**27.03.2013 Bulletin 2013/13**

(73) Proprietor: **NGK Insulators, Ltd.**
**Nagoya-city, Aichi 467-8530 (JP)**

(72) Inventors:
• **Hirose, Shogo**
**Nagoya-city, Aichi 467-8530 (JP)**

• **Miyairi, Yukio**
**Nagoya-city, Aichi 467-8530 (JP)**

(74) Representative: **Naylor, Matthew John**
**Mewburn Ellis LLP**
**33 Gutter Lane**
**London**
**EC2V 8AS (GB)**

(56) References cited:
**EP-A1- 2 168 662        WO-A1-2008/094889**
**US-A1- 2008 110 143**

**Description**

BACKGROUND OF THE INVENTION

Field of the Invention

The present invention relates to a honeycomb catalyst body. More particularly, it relates to the honeycomb catalyst body which is suitably used to purify an exhaust gas.

Description of the Related Art

An exhaust gas discharged from an internal combustion engine such as a car engine includes nitrogen oxides ($NO_x$). From the viewpoints of influences on global environment and the like, the purification of the nitrogen oxides included in the exhaust gas is required. A purifying method using an SCR catalyst is effective for the purification of the nitrogen oxides ($NO_x$). Therefore, the above SCR catalyst is broadly used for the purification of the exhaust gas discharged from the engine or the like (specifically, the purification of the nitrogen oxides included in the exhaust gas). The "SCR" is the abbreviation for "Selective Catalytic Reduction". "The SCR catalyst" means the catalyst which selectively reduces components to be purified by a reductive reaction. In particular, examples of the SCR catalyst can include a catalyst which selectively reduces the nitrogen oxides.

When the SCR catalyst is used to purify the exhaust gas, the SCR catalyst is loaded on a catalyst carrier, and used as a catalyst body (referred to also as the catalyst loading body) sometimes. As the catalyst carrier, for example, a honeycomb structure including partition walls to divide and form cells which become through channels of a fluid is used sometimes. The loading of the catalyst on the partition walls of such a honeycomb structure is referred to as catalyst coating sometimes.

As a gas treatment device including such a honeycomb catalyst body, for example, a gas treatment device including a flow channel material and a composite catalyst is suggested (e.g., see Patent Document 1). The flow channel material includes an inlet axial end, an outlet axial end, wall elements each having such a length as to extend from the inlet axial end to the outlet axial end, and a plurality of passages defined by the wall elements, surrounded in an axial direction and having opened ends. That is, the flow channel material becomes the above-mentioned honeycomb structure. The composite catalyst includes particles having an average particle diameter in excess of about three microns, and has a washcoat state where the catalyst is substantially deposited in the wall elements. In the gas treatment device of Patent Document 1, an average roughness of the surface of each wall element  does not substantially change from the roughness before the catalyst is deposited on the walls.

[Patent Document 1] JP 2010-516466 T

SUMMARY OF THE INVENTION

In an SCR catalyst to perform the purification of nitrogen oxides and the like, an amount of the SCR catalyst has a very large influence on a purification performance. Therefore, to enhance the purification performance by the SCR catalyst, a large amount of the catalyst is required. For example, in a honeycomb catalyst body in which the SCR catalyst is loaded on partition walls of a honeycomb structure, a large amount of catalyst coating is required. However, when the large amount of catalyst coating is performed, there occurs the problem that a pressure loss increases.

Moreover, in the honeycomb catalyst body in which the catalyst is loaded on the partition walls of the honeycomb structure, owing to a thickness of a layer formed by the catalyst coating, a cell open frontal area decreases, and an open area ratio of the honeycomb structure decreases. Therefore, there has further been the problem that the increase of the pressure loss is incurred.

Furthermore, to activate the SCR catalyst, a temperature of the SCR catalyst needs to become high to a certain degree. However, immediately after starting an engine, the honeycomb catalyst body is not warmed. In the conventional honeycomb catalyst body, there has also been the problem that time is required until the honeycomb catalyst body warms, and a purification ratio for the time lowers.

In addition, an exhaust gas discharged from an engine includes a large amount of water vapor. When the engine stops, an exhaust line extending from the engine becomes cool. As the exhaust line becomes cool, the water vapor included in the exhaust gas condenses to become water (also referred to as the moisture). In the above exhaust line, the honeycomb catalyst body is disposed as a gas treatment device sometimes. In pores of such a honeycomb catalyst body, the water formed by the condensation of the water vapor included in the exhaust gas accumulates. When the water accumulates in the pores of the honeycomb catalyst body, a large amount of heat is required as latent heat to evaporate the water at the next start of the engine. Consequently, there has further been the problem that more time is required for a temperature rise of the honeycomb catalyst body.

The present invention has been developed in view of the above-mentioned problems, and there is provided a honeycomb catalyst body which is suitably used to purify an exhaust gas discharged from an internal combustion engine or the like. In particular, there is provided the honeycomb catalyst body having a temperature which immediately rises to a temperature at which a catalyst is activated, when heat is applied to the honeycomb catalyst body.

According to the present invention, there is provided the following honeycomb catalyst body.

[1] A honeycomb catalyst body comprising: a tubular honeycomb structure including porous partition walls to divide and form a plurality of cells which extend from one end surface to the other end surface and become through channels of a fluid; and an SCR catalyst with which pores of the partition walls are filled and which is disposed to coat all areas of the surfaces of the partition walls and which selectively reduces components to be purified, wherein a porosity of the partition walls in a state where the pores are not filled with the SCR catalyst is 50% or larger, an average pore diameter of the partition walls which is obtained from a microphotograph obtained by photographing cross sections of the partition walls cut vertically to a thickness direction is 20 μm or larger at the centers of the partition walls in the thickness direction thereof in the state where the pores are not filled with the SCR catalyst, a porosity of the pores of the partition walls having pore diameters of 3 μm or larger in a state where the pores are filled with the SCR catalyst is 30% or smaller, and a thickness of a layer formed by the SCR catalyst disposed to coat all the areas of the surfaces of the partition walls is 20 μm or larger.

[2] The honeycomb catalyst body according to the above [1], wherein a value of a ratio of an average pore diameter of the partition walls which is obtained from a microphotograph obtained by photographing the surfaces of the partition walls in the state where the pores are not filled with the SCR catalyst to the average pore diameter of the partition walls which is obtained from the microphotograph obtained by photographing the cross sections of the partition walls cut vertically to the thickness direction at the centers of the partition walls thereof in the thickness direction in the state where the pores are not filled with the SCR catalyst is 60% or smaller.

[3] The honeycomb catalyst body according to the above [1] or [2], wherein a shape of the pores is such a substantially spherical shape that open areas of the pores in the cross sections of the partition walls cut vertically to the thickness direction of the partition walls gradually increase and continuously widen, and then gradually decrease and continuously narrow from one surface of each of the partition walls toward the other surface thereof.

[4] The honeycomb catalyst body according to any one of the above [1] to [3], wherein the average pore diameter of the partition walls which is obtained from the microphotograph obtained by photographing the cross sections of the partition walls cut vertically to the thickness direction is 15 μm or smaller at the centers of the partition walls in the thickness direction thereof in the state where the pores are filled with the SCR catalyst.

[5] The honeycomb catalyst body according to any one of the above [1] to [4], wherein the porosity of the pores of the partition walls having the pore diameters of 3 μm or larger in the state where the pores are filled with the SCR catalyst is 15% or smaller.

Effect of the Invention

A honeycomb catalyst body of the present invention comprises a tubular honeycomb structure, and an SCR catalyst. The honeycomb structure includes porous partition walls to divide and form a plurality of cells which extend from one end surface to the other end surface and become through channels of a fluid. Pores of the partition walls are filled with the SCR catalyst, and the SCR catalyst is disposed to coat all areas of the surfaces of the partition walls. The SCR catalyst selectively reduces components to be purified. Moreover, in the honeycomb catalyst body of the present invention, a porosity of the partition walls in a state where the pores are not filled with the SCR catalyst is 50% or larger.

Furthermore, an average pore diameter of the partition walls which is obtained from a microphotograph obtained by photographing cross sections of the partition walls cut vertically to a thickness direction is 20 μm or larger at the centers of the partition walls in the thickness direction thereof in the state where the pores are not filled with the SCR catalyst. Moreover, a porosity of the pores of the partition walls having pore diameters of 3 μm or larger in a state where the pores are filled with the SCR catalyst is 30% or smaller. A thickness of a layer formed by the SCR catalyst disposed to coat all the areas of the surfaces of the partition walls is 20 μm or larger. According to such a honeycomb catalyst body of the present invention, the components to be purified in an exhaust gas discharged from an internal combustion engine or the like can effectively be purified. In particular, the honeycomb catalyst body of the present invention can suitably be used as a catalyst body which purifies nitrogen oxides ($NO_x$) included in the exhaust gas.

Especially in the honeycomb catalyst body of the  present invention, as described above, all the areas of the surfaces of the partition walls are coated by the SCR catalyst. Moreover, the thickness of the layer by the SCR catalyst is 20 μm or larger. Therefore, in the pores of the partition walls of the honeycomb catalyst body in the present invention, a water of the aggregation of water vapor in the exhaust gas does not easily accumulate. In the honeycomb catalyst body of the present invention, a large amount of heat is not required as latent heat to evaporate the water accumulated in the pores. Therefore, when the heat is applied to the honeycomb catalyst body, a temperature of the body immediately rises to a temperature at which the catalyst is activated. Moreover, in addition to the above-mentioned SCR catalyst disposed on the surfaces of the partition walls, the pores of the partition walls are also filled with a sufficient amount of the SCR catalyst. In consequence, a suitable purification performance can be realized.

BRIEF DESCRIPTION OF THE DRAWING

Fig. 1 is a perspective view schematically showing an embodiment of a honeycomb catalyst body of the present invention;
Fig. 2 is a plan view schematically showing one end surface side of a honeycomb structure in the embodiment of the honeycomb catalyst body of the present invention;
Fig. 3 is a sectional view schematically showing a cross section which is parallel to a cell extending direction in the embodiment of the honeycomb catalyst body of the present invention;
Fig. 4 is a sectional view schematically showing a cross section cut along the A-A' line of Fig. 3;
Fig. 5 is a schematic view in which an area shown in B of Fig. 3 is enlarged;
Fig. 6 is a schematic view in which a cross section cut along the C-C' line of Fig. 3 is enlarged; and
Fig. 7 is a schematic view showing that pores of partition walls shown in Fig. 5 are not filled with an SCR catalyst.

DESCRIPTION OF THE PREFERRED EMBODIMENTS

Hereinafter, embodiments of the present invention will specifically be described with reference to the drawings. It should be understood that the present invention is not limited to the following embodiments and that modifications, improvements and the like are suitably added to the following embodiments on the basis of the ordinary knowledge of a person skilled in the art without departing from the scope of the present invention.

(1) Honeycomb Catalyst Body:

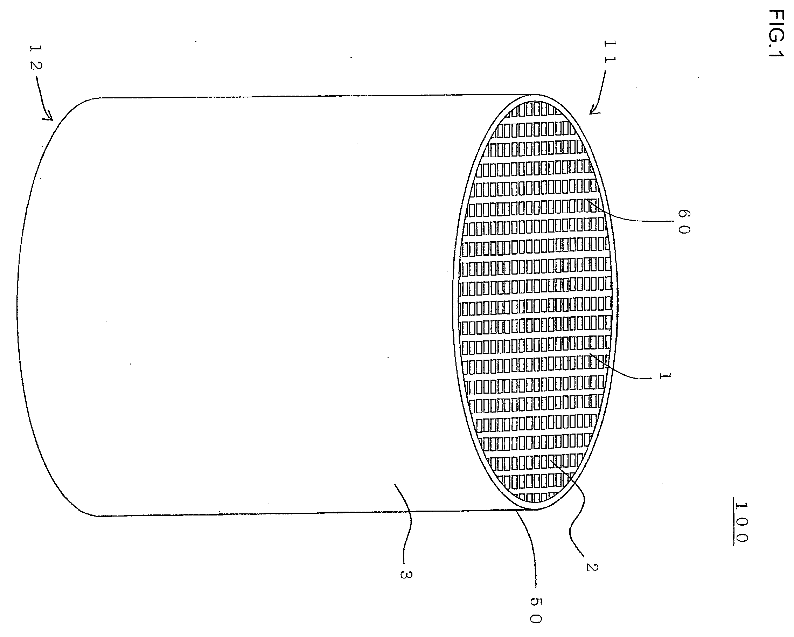

As shown in Fig. 1 to Fig. 7, a honeycomb catalyst  body 100 of an embodiment of the present invention comprises a tubular honeycomb structure 50, and an SCR catalyst 60. The honeycomb structure 50 is a catalyst carrier on which the SCR catalyst 60 is loaded. The honeycomb structure 50 includes porous partition walls 1 to divide and form a plurality of cells 2 which extend from one end surface 11 to the other end surface 12 and become through channels of a fluid. Moreover, pores 15 of the partition walls 1 are filled with the SCR catalyst 60, and the catalyst is disposed to coat all areas of the surfaces of the partition walls 1. The SCR catalyst 60 selectively reduces components to be purified. Hereinafter, the filling of the pores 15 of the partition walls 1 with the SCR catalyst 60 and the disposing of the catalyst to coat all the areas of the surfaces of the partition walls 1 will generically be referred to as "the loading of the SCR catalyst 60 on the partition walls 1" sometimes.

In the honeycomb catalyst body 100 of the present embodiment, a porosity of the partition walls 1 in a state where the pores 15 are not filled with the SCR catalyst 60 is 50% or larger. This porosity is a value measured by a mercury porosimeter.

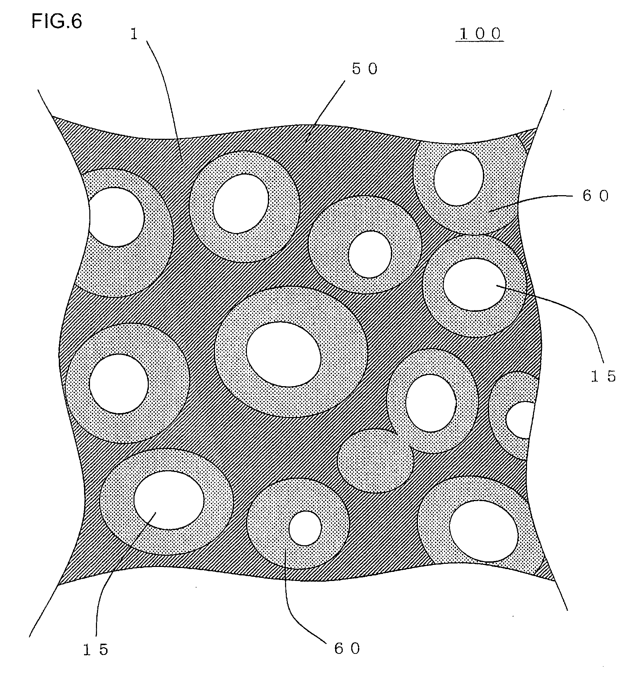

Moreover, an average pore diameter of the partition walls 1 which is obtained from a microphotograph obtained by photographing cross sections of the partition walls 1  cut vertically to a thickness direction is 20 μm or larger at the centers of the partition walls 1 in the thickness direction thereof in the state where the pores 15 are not filled with the SCR catalyst 60. Hereinafter, "the average pore diameter of the partition walls which is obtained from the microphotograph obtained by photographing the above cross sections of the partition walls" will be referred to as "the average pore diameter of the partition wall cross sections" sometimes. Each of the above cross sections is, for example, a cross section shown in Fig. 6. Additionally, Fig. 6 shows a state where the pores 15 are filled with the SCR catalyst 60.

Furthermore, in the honeycomb catalyst body 100 of the present embodiment, "a porosity of the pores of the partition walls 1 having pore diameters of 3 μm or larger" in the state where the pores 15 are filled with the SCR catalyst is 30% or smaller. This porosity is a value measured by the mercury porosimeter as described later.

Additionally, in the honeycomb catalyst body 100 of the present embodiment, a layer 61 of the SCR catalyst 60 is formed on the surfaces of the partition walls 1 by the SCR catalyst 60 disposed to coat all the areas of the surfaces of the partition walls 1. In the honeycomb catalyst body 100 of the present embodiment, a thickness T of the layer 61 of the SCR catalyst 60 is 20 μm or larger. Hereinafter, "the layer of the SCR catalyst" will be referred to as "the SCR catalyst layer" sometimes.

According to the honeycomb catalyst body 100 of the present embodiment, the components to be purified in an exhaust gas discharged from an internal combustion engine or the like can effectively be purified. In particular, the honeycomb catalyst body 100 of the present embodiment can suitably be used as a catalyst body which purifies nitrogen oxides ($NO_x$) included in the exhaust gas. In the pores 15 of the partition walls 1 of the honeycomb catalyst body 100 of the present embodiment, a water of the aggregation of water vapor in the exhaust gas does not easily accumulate. In the honeycomb catalyst body 100 of the present embodiment, a large amount of heat is not required as latent heat to evaporate the water accumulated in the pores 15. Therefore, when the heat is applied to the honeycomb catalyst body 100, a temperature of the body immediately rises to a temperature at which the catalyst is activated. Moreover, in addition to the above-mentioned SCR catalyst 60 disposed on the surfaces of the partition walls 1, the pores 15 of the partition walls 1 are also filled with a sufficient amount of the SCR catalyst. In consequence, a suitable purification performance can be realized.

Specifically, in the honeycomb catalyst body 100 of the present embodiment, the following two constitutions are employed to intend to decrease an amount of a water accumulated in remaining voids of the partition walls 1. First, an amount of the remaining voids in the partition walls 1 is decreased to decrease a volume in which the water accumulates. That is, the pores 15 of the partition walls 1 are filled with a specific amount of the SCR catalyst 60. Secondly, the SCR catalyst layer 61 is disposed on the surfaces of the partition walls 1, whereby the water is prevented from reaching the remaining voids of the partition walls 1, to decrease the amount of the water accumulated in the remaining voids. In the above second constitution, the SCR catalyst layer 61 becomes a resistance to prevent the water from reaching the remaining voids. The remaining voids are spaces formed by the pores which are not completely closed by the SCR catalyst, when the pores are filled with the SCR catalyst.

It is to be noted that the SCR catalyst 60 itself is provided with pores, and hence the water is also adsorbed on the SCR catalyst 60. The water is adsorbed also on, for example, the SCR catalyst layer 61 disposed on the surfaces of the partition walls 1. However, the water adsorbed on the SCR catalyst layer 61 easily diffuses in the gas by substance diffusion, in an initial stage where the heat is applied to the honeycomb catalyst body 100. Therefore, an influence of the water adsorbed on the SCR catalyst 60 to disturb the temperature rise of the honeycomb catalyst body is remarkably small as compared with the water accumulated in the remaining voids of the partition walls. That is, to raise the temperature of the honeycomb catalyst body 100 to the temperature at which the catalyst is activated more rapidly when the heat is applied to the honeycomb catalyst body, how to prevent the water from being accumulated in the remaining voids of the partition walls 1 is important.

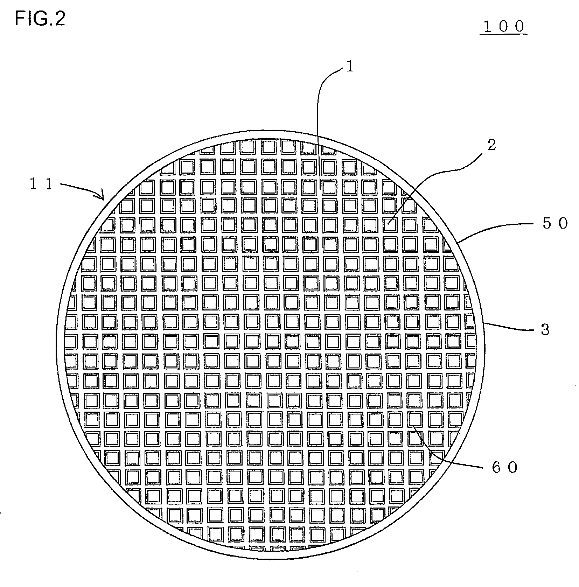

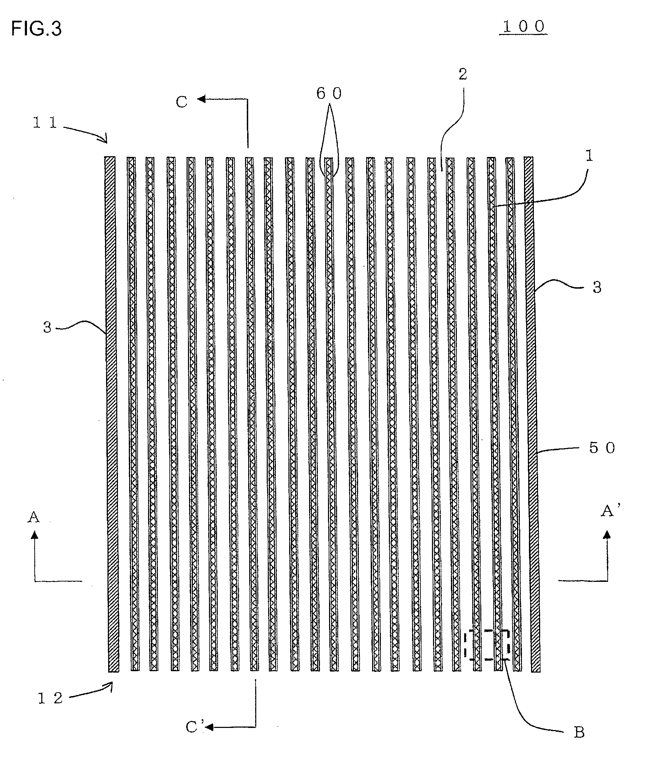

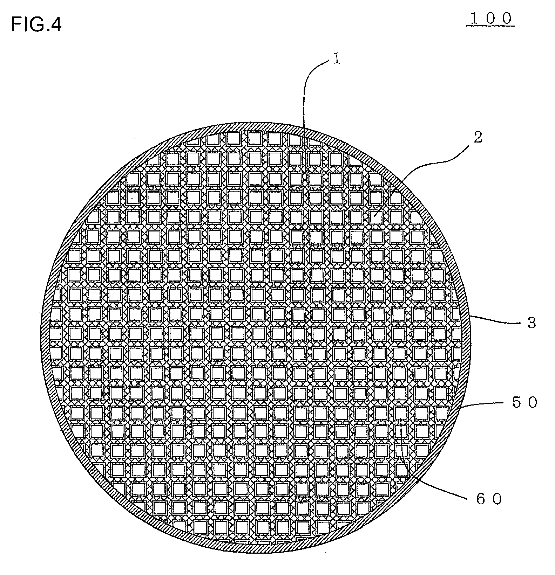

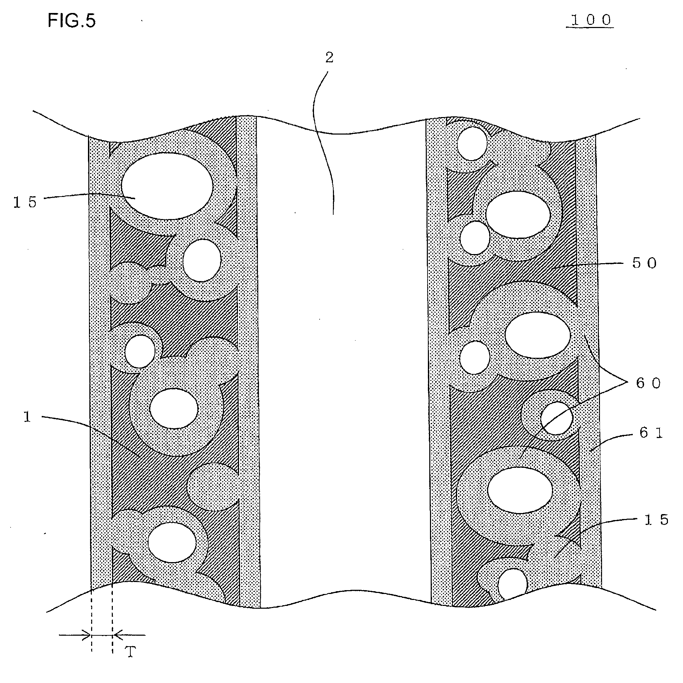

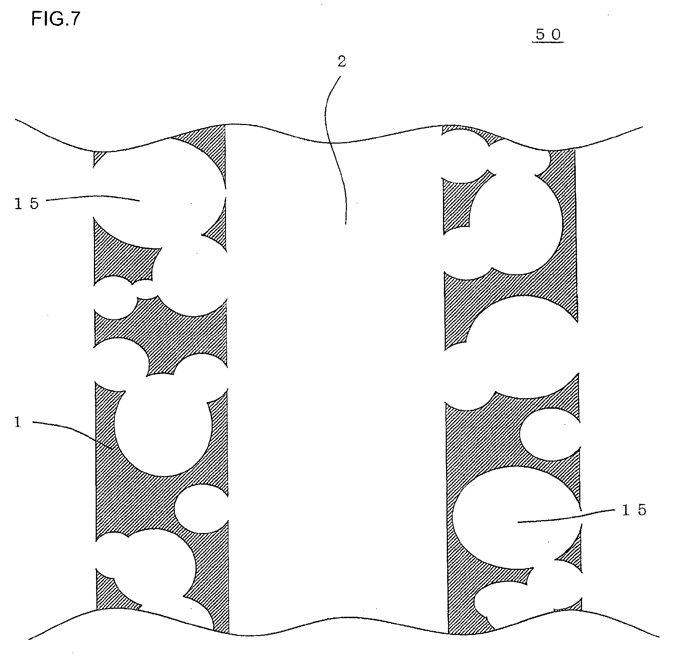

Here, Fig. 1 is a perspective view schematically showing the embodiment of the honeycomb catalyst body of the present invention. Fig. 2 is a plan view schematically showing one end surface side of a honeycomb structure in the embodiment of the honeycomb catalyst body of the present invention. Fig. 3 is a sectional view schematically showing a cross section which is parallel to a cell extending direction in the embodiment of the honeycomb catalyst body of the present invention. Fig. 4 is a sectional view schematically showing a cross section cut along the A-A' line of Fig. 3. Fig. 5 is a schematic view in which an area shown in B of Fig. 3 is enlarged. Fig. 6 is a schematic view in which a cross section cut along the C-C' line of Fig. 3 is enlarged. Fig. 7 is a schematic view showing that pores of partition walls shown in Fig. 5 are not filled with an SCR catalyst. As shown in Fig. 1 to Fig. 4, the honeycomb structure 50 further includes an outer peripheral wall 3 positioned in the outermost periphery.

In the present description, "the state where the pores are not filled with the SCR catalyst" will hereinafter be referred to as "the non-filled state" sometimes. The non-filled state means a state of the partition walls 1 shown in Fig. 7. On the other hand, "the state where the pores are filled with the SCR catalyst" will hereinafter be referred to as "the filled state" sometimes. The filled state means a state of the partition walls 1 shown in Fig. 5 and Fig. 6.

"The porosity of the pores having pore diameters of 3 μm or larger" means the porosity obtained when the pores having the pore diameters of 3 μm or larger are regarded as the pores of the partition walls. That is, "the porosity of the pores having the pore diameters of 3 μm or larger" is the porosity obtained by supposing that microscopic pores having pore diameters which are smaller than 3 μm are solid portions. Such a porosity can be measured using a mercury porosimeter by, for example, the following method. First, a pore diameter distribution of a porous body which is a measurement object is obtained using the mercury porosimeter. Next, a distribution corresponding to the pores having the pore diameters which are smaller than 3 μm is excluded from this pore diameter distribution, to obtain pore volumes of the pores having the pore diameters of 3 μm or larger. Moreover, a true specific gravity of the porous body which is the measurement object is obtained. From the pore volumes of the pores having the pore diameters of 3 μm or larger and the true specific gravity of the porous body, "the porosity of the pores having the pore diameters of 3 μm or larger" is obtained. It is to be noted that the pore volumes of the pores having the pore diameters of 3 μm or larger may directly be obtained by using the mercury porosimeter.

A reason why the porosity of the partition walls in the filled state is obtained as "the porosity of the pores having the pore diameters of 3 μm or larger" is as follows. The SCR catalyst is provided with the microscopic pores having the pore diameters which are smaller than 3 μm sometimes. Moreover, the porosity of the SCR catalyst is, for example, from 30 to 50%. In the honeycomb catalyst body of the present embodiment, the pores of the partition walls are filled with the SCR catalyst, to decrease the amount of the remaining voids of the partition walls. Therefore, when the filling state of the pores of the partition walls with the SCR catalyst is stipulated, the porosity obtained by supposing that the SCR catalyst is solid is preferably used. In the present invention, as a substitute for the porosity obtained by supposing that the SCR catalyst is solid, the above "porosity of the pores having the pore diameters of 3 μm or larger" is used.

In the honeycomb catalyst body 100 of the present embodiment, the pores 15 of the partition walls 1 are filled with the SCR catalyst 60, and the SCR catalyst 60 is also disposed to coat all the areas of the surfaces of the partition walls 1. That is, open frontal areas of the pores 15 of the partition walls 1 are coated with the comparatively dense SCR catalyst layer 61. Moreover, the pores 15 of the partition walls 1 are also filled with a specific amount of the SCR catalyst 60. Therefore, the water generated during the aggregation of the water vapor in the exhaust gas does not easily accumulate in the remaining voids of the pores 15 of the partition walls 1. In the honeycomb catalyst body 100 of the present embodiment, a large amount of heat is not required as the latent heat to evaporate the water accumulated in the pores 15. Therefore, when the heat is applied to the honeycomb catalyst body 100, the temperature of the SCR catalyst 60 rapidly rises to the activating temperature.

Moreover, a thickness T of the SCR catalyst layer 61 is 20 μm or larger, and the pores 15 of the partition walls 1 are also filled with the sufficient amount of the SCR catalyst 60. Therefore, in the honeycomb catalyst body 100 of the present embodiment, a suitable purification performance can be realized.

When the thickness T of the SCR catalyst layer 61 is 20 μm or larger, the thickness of the thinnest portion of the SCR catalyst layer 61 disposed on the surfaces of the partition walls 1 is at least 20 μm or larger. When the thickness T of the SCR catalyst layer 61 is smaller than 20 μm, the water easily enters the pores 15 of the partition walls 1. The thickness T of the SCR catalyst layer 61 is preferably from 20 to 120 μm, further preferably from 30 to 100 μm, and especially preferably from 40 to 80 μm. When the thickness T of the SCR catalyst layer 61 is in excess of 120 μm, the SCR catalyst layer 61 becomes excessively thick, and a pressure loss increases sometimes.

Examples of a method of measuring the thickness T of the SCR catalyst layer 61 can include the following method. First, the honeycomb structure is cut vertically to the cell extending direction. A position to cut the honeycomb structure is preferably a central portion of the cell extending direction. Next, the cut cross section of the honeycomb structure is photographed by a scanning type electron microscope (SEM). Next, in the obtained microphotograph, any five cells are selected, and a thickness of an SCR catalyst layer disposed on the surfaces of the cells is measured. To measure the thickness of the SCR catalyst layer, the thickness at a position having the smallest thickness in the SCR catalyst layer photographed in the microphotograph is measured. Next, an average value of obtained measurement values (the thicknesses) is calculated. The obtained measurement value is "the thickness T of the SCR catalyst layer".

Moreover, as described above, the porosity of the partition walls in the non-filled state is 50% or larger. When the porosity of the partition walls in the non-filled state is smaller than 50%, the pressure loss of the honeycomb catalyst body 100 increases. That is, when the porosity of the partition walls in the non-filled state is smaller than 50%, the pressure loss of the honeycomb structure 50 itself increases. Furthermore, when the amount of the SCR catalyst 60 required for the purification of $NO_x$ included in the exhaust gas is loaded on the honeycomb structure 50, the amount of the SCR catalyst 60 disposed on the surfaces of the partition walls 1 becomes large sometimes. In such a case, the thickness of the SCR catalyst layer 61 becomes excessively large. In consequence, the pressure loss of the honeycomb catalyst body 100 increases sometimes.

The porosity of the partition walls in the non-filled state is preferably from 50 to 85%, further preferably from 50 to 70%, and especially preferably from 50 to 65%. When the porosity of the partition walls in the non-filled state is in excess of 85%, a strength of the honeycomb structure deteriorates sometimes.

Moreover, as described above, the average pore diameter of the partition wall cross sections in the non-filled state is 20 μm or larger. When the average pore diameter of the partition wall cross sections in the non-filled state is smaller than 20 μm, the pores are not filled with the SCR catalyst, and the thickness of the SCR catalyst layer on the partition wall surfaces becomes excessively large. In consequence, hydraulic diameters of the cells become excessively small, and the pressure loss of the honeycomb catalyst body increases. Furthermore, gas diffusion becomes insufficient, and the purification performance of the honeycomb catalyst body also deteriorates.

The average pore diameter of the partition wall cross sections in the non-filled state is preferably from 20 to 250 μm, further preferably from 30 to 200 μm, and especially preferably from 40 to 150 μm.

Hereinafter, a measuring method of the average pore diameter of the partition wall cross sections in the non-filled state will specifically be described. First, a honeycomb block is cut from the honeycomb structure in the state where the pores are not filled with the SCR catalyst. Examples of the honeycomb block can include a cube having each side length of 20 mm (20 mm × 20 mm × 20 mm). Next, pores of the honeycomb block are filled with a resin. Next, the honeycomb block filled with the resin is ground to the vicinities of the partition wall surfaces by rough grinding. Next, by finish grinding, the block is ground to the centers of the partition walls in the thickness direction, and the ground surfaces of the partition walls are mirror-finished. A view field of 1 mm × 1 mm of the mirror-finished surfaces of the partition walls (i.e., the surfaces of the partition walls ground to the centers thereof) is photographed at a magnification of 100 times by the scanning type electron microscope (SEM). The above "surfaces of the partition walls ground to the centers" are "the cross sections of the partition walls cut vertically to the thickness direction" in the present invention.

The cross sections of the partition walls can be photographed by, for example, a scanning type electron microscope "S-3400N (trade name)" manufactured by Hitachi Ltd. Photographing conditions are preferably an acceleration voltage of 15 kV, a magnification of 100 times, and the view field of 1 mm × 1 mm.

Next, an image of the obtained microphotograph is analyzed, to calculate a diameter of an inscribed circle drawn in each pore in the microphotograph. That is, by the image analysis, the diameter of the inscribed circle of each pore in the microphotograph is calculated. From the obtained diameter of the inscribed circle, an area of the inscribed circle is obtained, and an average diameter dm is obtained by the following equation (1). The average diameter dm is an average diameter which is weighed by the area and averaged. A value of the average diameter dm is "the average pore diameter of the partition wall cross sections"

$$dm = (1/\Sigma S_i)\Sigma(d_i S_i) \ ... \ (1)$$

(Additionally, in the above equation (1), $d_i$ is the diameter of each inscribed circle. In the above equation (1), $S_i$ is the area of each inscribed circle. In the above equation (1), dm is the average diameter.)

In the honeycomb catalyst body of the present embodiment, "the porosity of the pores having the pore diameters of 3 μm or larger" in the partition walls in the filled state is 30% or smaller. When "the porosity of the pores having the pore diameters of 3 μm or larger" in the partition walls in the filled state is in excess of 30%, the amount of the SCR catalyst with which the pores of the partition walls are filled becomes small. Also in such a case, the purification performance of the honeycomb catalyst body deteriorates. Hereinafter, "the porosity of the pores having the pore diameters of 3 μm or larger in the partition walls in the filled state" will simply be referred to as "the porosity of the partition walls in the filled state" sometimes.

The porosity of the partition walls in the filled state is preferably 15% or smaller, and further preferably 10% or smaller. According to such a constitution, the remaining voids in the pores of the partition walls decrease, and the water further does not easily penetrate the remaining voids.

There are not any special restrictions on an lower limit value of the porosity of the partition walls in the filled state. For example, the lower limit value of the porosity of the partition walls in the filled state is preferably 5%. When the porosity of the partition walls in the filled state is smaller than 5%, the gas insufficiently diffuses into the SCR catalyst. Conversely, the purification performance deteriorates sometimes.

Here, the above-mentioned average pore diameter of the partition wall cross sections in the non-filled state is "the average pore diameter d1". Moreover, the average pore diameter of the partition walls obtained from the microphotograph obtained by photographing the surfaces of the partition walls in the non-filled state is "the average pore diameter d2". A value of a ratio of the average pore diameter d2 to the average pore diameter d1 (i.e., "d2/d1×100") is preferably 60% or smaller. When the value of the ratio is 60% or smaller, the penetration of the water into the remaining voids in the pores of the partition walls can effectively be prevented when the SCR catalyst is disposed on the surfaces of the partition walls in the form of the layer.

The value of the ratio is preferably from 30 to 60%, further preferably from 30 to 50%, and especially preferably from 30 to 40%. When the ratio value is set in this manner, pores which are large for the surfaces of the partition walls are formed in the partition walls. Therefore, the water further does not easily penetrate the remaining voids in the pores of the partition walls.

The average pore diameter d2 of the surfaces of the partition walls in the non-filled state can be measured as follows. First, the surfaces of the partition walls in the state where the pores are not filled with the SCR catalyst are photographed in the microphotograph. The photographing of the cross sections of the partition walls can be performed by, for example, the scanning type electron microscope "S-3400N (trade name)" manufactured by Hitachi Ltd. The photographing conditions are preferably the same as in the photographing of the partition wall cross sections.

Next, the image of the obtained microphotograph is analyzed, to calculate the diameter of the inscribed circle drawn in each pore in the microphotograph. That is, by the image analysis, the diameter of the inscribed circle of each pore in the microphotograph is calculated. The average diameter dm is obtained by the above equation (1), in which $d_i$ is the diameter of each inscribed circle and $S_i$ is the area of each inscribed circle. The average diameter dm is the average diameter weighed by the area and averaged. The value of the average diameter dm is "the average pore diameter d2 of the surfaces of the partition walls". Thus, the average pore diameter d2 can be obtained by the method similar to the above "measuring method of the average pore diameter of the partition wall cross sections in the non-filled state" except that the surfaces of the partition walls are photographed.

Moreover, the pores formed in the partition walls preferably have the following shape. In the shape, open areas of the pores in the cross sections of the partition walls cut vertically to the thickness direction of the partition walls gradually increase and continuously widen, and then gradually decrease and continuously narrow from one surface of each of the partition walls toward the other surface thereof. Hereinafter, such a shape of the pores will be referred to as "the substantially spherical shape" sometimes. When the shape of the pores is the above "substantially spherical shape", the water further does not easily penetrate the remaining voids in the pores of the partition walls.

Furthermore, the average pore diameter of the partition walls which is obtained from the microphotograph obtained by photographing the cross sections of the partition walls cut vertically to the thickness direction at the centers of the partition walls in the thickness direction thereof in the filled state is preferably 15 $\mu$m or smaller. That is, the average pore diameter of the partition wall cross sections in the filled state is preferably 15 $\mu$m or smaller. According to such a constitution, the water further does not easily penetrate the remaining voids in the pores of the partition walls. The average pore diameter of the partition wall cross sections in the filled state is further preferably from 10 to 15 $\mu$m, and especially preferably from 10 to 12 $\mu$m.

"The measuring of the average pore diameter of the partition wall cross sections in the filled state" is performed by a method similar to the above "measuring of the average pore diameter of the partition wall cross sections in the non-filled state" except that the measuring is performed in the state where the pores of the partition walls are filled with the SCR catalyst. In "the measuring of the average pore diameter of the partition wall cross sections in the filled state", the average pore diameter of the remaining voids in the pores of the partition walls is measured.

Moreover, as shown in Fig. 1 to Fig. 7, the partition walls 1 of the honeycomb structure 50 are preferably made of a material including, as a main component, at least one type selected from the group consisting of cordierite, aluminum titanate, silicon carbide, and mullite. According to such a constitution, thermal expansion of the honeycomb structure 50 can be made smaller, and a thermal shock resistance of the honeycomb structure 50 can be enhanced. Examples of components other than the main component can include alumina, silica, titania, and glass.

In the present description, "the main component" means the component having a content of 90 mass% or more in a constitutional material. That is, the partition walls 1 of the honeycomb structure 50 are preferably made of a porous body including 90 mass% or more of at least one type selected from the group consisting of cordierite, aluminum titanate, silicon carbide, and mullite. Moreover, the partition walls 1 are further preferably made of a material containing 95 mass% or more of the above component, and especially preferably made of a material containing 98 mass% or more.

Moreover, the thicknesses of the partition walls 1 of the honeycomb structure 50 are preferably from 0.051 to 0.254 mm. When the thicknesses of the partition walls 1 are set to the above numeric range, the pressure loss can be decreased, while maintaining the strength of the partition walls 1. The thicknesses of the partition walls 1 are further preferably from 0.051 to 0.150 mm, and especially preferably from 0.051 to 0.125 mm.

"The thickness of each partition wall" means the thickness of the wall (the partition wall 1) to divide two adjacent cells 2 in the cross section of the honeycomb structure 50 cut vertically to the extending direction of the cells 2. "The thicknesses of the partition walls" can be measured by, for example, an image analysis device ("NEXIV, VMR-1515 (trade name)" manufactured by Nikon Corp.).

A cell density of the honeycomb structure 50 is preferably from 15.5 to 108.5 cells/cm$^2$. When the cell density is set to the above numeric range, the increase of the pressure loss can effectively be prevented. Moreover, when the SCR catalyst is loaded on the partition walls 1 of the honeycomb structure 50, the high purification performance can be obtained. "The cell density of the honeycomb structure" means the number of the cells per unit area in the cross section which is orthogonal to the cell extending direction. The cell density of the honeycomb structure 50 is further preferably from 46.5 to 77.5 cells/cm$^2$, and especially preferably from 46.5 to 70 cells/cm$^2$.

There are not any special restrictions on a shape of the honeycomb structure 50. Examples of the shape of the honeycomb structure include a tubular shape (a cylindrical shape) in which an end surface of the honeycomb structure has a round shape, a tubular shape in which the end surface has an oval shape, and a tubular shape in which the end surface has a polygonal shape. Examples of the polygonal shape include a quadrangular shape, a pentangular shape, a hexagonal shape, a heptagonal shape, and an octagonal shape. Fig. 1 to Fig. 4 show an example of a case where the shape of the honeycomb structure 50 has a tubular shape in which the end surface has a round shape.

Examples of a shape of the cells 2 in the cross section which is orthogonal to the extending direction of the cells 2 can include a quadrangular shape, a hexagonal shape, an octagonal shape, a round shape and combinations of these shapes. In the quadrangular shape, a square shape or a rectangular shape is preferable.

The SCR catalyst is a catalyst which selectively reduces components to be purified. Especially in the honeycomb catalyst body of the present embodiment, the SCR catalyst is preferably an $NO_x$ selective reducing SCR catalyst which selectively reduces $NO_x$ in the exhaust gas. Suitable examples of the $NO_x$ selective reducing SCR catalyst can include a catalyst which selectively reduces $NO_x$ in the exhaust gas of a diesel engine to purify the exhaust gas.

Examples of the SCR catalyst can include a metal substituted zeolite. Examples of a metal of the metal substituted zeolite can include iron (Fe) and copper (Cu). Suitable examples of the zeolite can include a beta zeolite.

Moreover, the SCR catalyst may be a catalyst containing at least one type selected from the group consisting of vanadium and titania as a main component. A content of vanadium or titania in the SCR catalyst is preferably 60 mass% or larger.

There are not any special restrictions on an amount of the SCR catalyst to be loaded on the partition walls. Hereinafter, the amount of the SCR catalyst to be loaded on the partition walls will be referred to as "the loading amount" sometimes. The loading amount (g/L) per unit volume of the honeycomb structure is preferably 200 g/L or larger. According to such a constitution, the components to be purified can suitably be purified. An upper limit of the loading amount (g/L) of the SCR catalyst is preferably, for example, 400 g/L. When the loading amount of the SCR catalyst is in excess of 400 g/L, the amount of the SCR catalyst is excessively large, and hence the pressure loss increases sometimes. Therefore, the loading amount of the SCR catalyst is further preferably from 200 to 350 g/L, and especially preferably from 200 to 300 g/L.

(2) Manufacturing Method of Honeycomb Catalyst Body:

Next, a manufacturing method of the honeycomb catalyst body of the present embodiment will be described. The manufacturing method of the honeycomb catalyst body of the present embodiment includes a step of preparing a honeycomb structure, and a step of loading an SCR catalyst on the obtained honeycomb structure to prepare the honeycomb catalyst body.

(2-1) Preparation of Honeycomb Structure:

First, the step of preparing a honeycomb structure for use in the honeycomb catalyst body of the present embodiment will be described.

In the step of preparing the honeycomb structure, first, forming raw materials containing a ceramic raw material are mixed and kneaded to obtain a kneaded material. As the ceramic raw material, at least one type selected from the group consisting of a cordierite forming raw material, aluminum titanate, silicon carbide and mullite is preferably used. It is to be noted that the cordierite forming raw material is the ceramic raw material blended so as to obtain a chemical composition in a range including 42 to 56 mass% of silica, 30 to 45 mass% of alumina, and 12 to 16 mass% of magnesia. The cordierite forming raw material is fired to become cordierite.

Moreover, the forming raw material is preferably prepared by further mixing the above ceramic raw material with a dispersion medium, an organic binder, an inorganic binder, a surfactant, a pore former and the like. There are not any special restrictions on composition ratios of the respective raw materials, and the composition ratios are preferably set in accordance with a structure, a material and the like of the honeycomb structure to be prepared.

As the dispersion medium, water can be used. An amount of the dispersion medium to be added is preferably from 10 to 30 parts by mass to 100 parts by mass of the ceramic raw material.

As the organic binder, methylcellulose, hydroxypropyl methylcellulose, hydroxypropyl ethyl cellulose, hydroxyethyl cellulose, carboxymethylcellulose, polyvinyl alcohol or a combination of these binders is preferably used. Moreover, an amount of the organic binder to be added is preferably from 0.5 to 5 parts by mass to 100 parts by mass of the ceramic raw material.

As the surfactant, ethylene glycol, dextrin, fatty acid soap, polyalcohol or the like can be used. These surfactants may be used alone, or two or more of the surfactants may be combined and used. An amount of the surfactant to be added is preferably from 0.5 to 2 parts by mass to 100 parts by mass of the ceramic raw material.

As the pore former, resin particles, starch, carbon or the like can be used. An amount of the pore former to be added is preferably such an amount that the porosity of the partition walls of the obtained honeycomb structure is 50% or larger. For example, the amount of the pore former to be added is preferably from 2 to 10 parts by mass to 100 parts by mass of the ceramic raw material. Furthermore, a size of the pore former is preferably such a size that the average pore diameter of the partition wall cross sections of the obtained honeycomb structure is 20 µm or larger. For example, an average particle diameter of the pore former is preferably from 15 to 200 µm. In addition, a pore former having an average particle diameter which becomes large by thermal expansion may be used. In this case, the average particle diameter of the pore former in an expanded state is preferably from 15 to 200 $\mu$m

There are not any special restrictions on a method of kneading the forming raw material to form a kneaded material, and examples of the method can include methods using a kneader, a vacuum clay kneader and the like.

Next, the obtained kneaded material is formed, and a tubular formed honeycomb body is formed. The formed honeycomb body includes partition walls to divide and form a plurality of cells. There are not any special restrictions on a method of forming the kneaded material and forming the formed honeycomb body, and a known forming method such as extrusion forming or injection forming can be used. Suitable examples of the method can include a method of performing the extrusion forming by use of a die having a desirable cell shape, partition wall thickness and cell density. As a material of the die, a hard metal which does not easily wear is preferable.

Next, the obtained formed honeycomb body is dried. Next, the dried formed honeycomb body is fired. In consequence, it is possible to obtain a honeycomb structure including porous partition walls to divide and form a plurality of cells which become through channels of a fluid.

Examples of a drying method can include hot air drying, microwave drying, dielectric drying, reduced pressure drying, vacuum drying, and freeze drying. Above all, the dielectric drying, the microwave drying or hot air drying is preferably performed alone or as a combination thereof.

Prior to firing the formed honeycomb body, this formed honeycomb body is preferably calcinated. The calcinating is performed for degreasing. There are not any special restrictions on a calcinating method. For example, at least part of organic materials in the formed honeycomb body can be removed. Examples of the above organic materials can include the organic binder, the surfactant and the pore former. A burning temperature of the organic binder is from about 100 to 300°C. Therefore, in the calcinating, heating is preferably performed at a temperature of about 200 to 1000°C in oxidation atmosphere for about 10 to 100 hours.

The formed honeycomb body is fired so that the forming raw material constituting the calcinated formed body is sintered and densified, to acquire a predetermined strength. Firing conditions vary in accordance with the type of the forming raw material, and hence suitable conditions may be selected in accordance with the type. For example, when the cordierite forming raw material is used, the firing temperature is preferably from 1350 to 1440°C. Moreover, as the firing time, a time for keeping the highest temperature is preferably from 3 to 10 hours. Examples of a device which performs the calcinating and firing can include an electric furnace, and a gas furnace.

(2-2) Preparation of Honeycomb Catalyst Body:

Next, a step of loading the SCR catalyst on the honeycomb structure to prepare the honeycomb catalyst body will be described. As the honeycomb structure, the honeycomb structure obtained by the above-mentioned preparing step of the honeycomb structure can be used.

First, a catalyst slurry including the SCR catalyst is prepared. The partition walls of the honeycomb structure are coated with this catalyst slurry, to load the SCR catalyst on the partition walls of the honeycomb structure. When the partition walls of the honeycomb structure are coated with the catalyst slurry, the pores of the partition walls are also filled with the catalyst slurry.

When the honeycomb catalyst body of the present embodiment is prepared, it is necessary to load the SCR catalyst so that the porosity of the partition walls in the filled state is 30% or smaller. That is, when the honeycomb catalyst body of the present embodiment is prepared, the pores of the partition walls are preferably filled with the larger amount of the SCR catalyst. In consequence, the remaining voids of the pores of the partition walls can be decreased. Therefore, the porosity of the partition walls lowers. It is to be noted that "the porosity of the partition walls in the filled state" mentioned herein is "the porosity of the pores of the partition walls having the pore diameters of 3 $\mu$m or larger in the filled state".

Examples of a method of filling the pores of the partition walls with the larger amount of the SCR catalyst can include a method of lowering a viscosity of the catalyst slurry. The viscosity of the catalyst slurry can be controlled by regulating a ratio of the water content of the catalyst slurry. The viscosity of the catalyst slurry is preferably 8 mPa•s or smaller, further preferably from 7 to 5 mPa•s, and especially preferably from 7 to 6 mPa•s.

Moreover, examples of another method of filling the pores of the partition walls with the larger amount of the SCR catalyst can include a method of decreasing particle diameters of the SCR catalyst included in the catalyst slurry. The particle diameters of the SCR catalyst included in the catalyst slurry are preferably 10 $\mu$m or smaller, further preferably from 3 to 5 $\mu$m, and especially preferably from 4 to 5 $\mu$m.

Furthermore, when the partition walls of the honeycomb structure are coated with the catalyst slurry, the honeycomb structure is preferably contained in a container, and the catalyst slurry is preferably introduced into this container. Prior to introducing the catalyst slurry into the container, the inside of the container containing the honeycomb structure is further preferably drawn to vacuum. When the inside of the container is drawn to vacuum, the pores of the partition walls are filled with the larger amount of the catalyst slurry.

After coating the partition walls of the honeycomb structure with the catalyst slurry, the catalyst slurry is dried.

Furthermore, the dried catalyst slurry may be fired. Thus, the honeycomb catalyst body of the present embodiment can be manufactured.

Examples

Hereinafter, examples of the present invention will further specifically be described, but the present invention is not limited to these examples.

(Example 1)

First, a honeycomb structure for use in a honeycomb catalyst body was prepared. As a ceramic raw material to prepare the honeycomb structure, a cordierite forming raw material was used. To the cordierite forming raw material, a dispersion medium, an organic binder, a dispersant and a pore former were added, to prepare a kneaded material for forming. An amount of the dispersion medium to be added was 30 parts by mass to 100 parts by mass of the cordierite forming raw material. An amount of the organic binder to be added was 1 part by mass to 100 parts by mass of the cordierite forming raw material. An amount of the pore former to be added was 5 parts by mass to 100 parts by mass of the cordierite forming raw material.

As the cordierite forming raw material, a material including 38.9 parts by mass of talc, 40.7 parts by mass of kaolin and 5.9 parts by mass of alumina was used. An average particle diameter of talc was 10 $\mu$m. An average particle diameter of kaolin was 40 $\mu$m. An average particle diameter of alumina was 6 $\mu$m. The above average particle diameter is a median diameter (d50) in a particle diameter distribution of each type of raw material particles.

As the dispersion medium, water was used. As the organic binder, hydroxypropyl methylcellulose was used. As the dispersant, ethylene glycol was used. As the pore former, hollow resin particles having an average particle diameter of 30 $\mu$m were used.

Next, the obtained kneaded material was extruded by using a die to form a honeycomb formed body. Thus, the honeycomb formed body was prepared. Then, the honeycomb formed body was dried by a microwave drier. Both end surfaces of the dried honeycomb formed body were cut and adjusted to a predetermined dimension. Afterward, the honeycomb formed body was further dried by a hot air drier.

The dried honeycomb formed body was fired at 1445°C for five hours. Thus, the honeycomb structure was prepared. A partition wall thickness of the honeycomb structure was 0.1397 mm. A cell density of the honeycomb structure was 46.5 cells/cm$^2$. A porosity of the honeycomb structure was 50%. An average pore diameter of partition wall cross sections was 20 $\mu$m. An average pore diameter of partition wall surfaces was 10 $\mu$m. "A value of a ratio of (B) to (A)" in which (A) was the average pore diameter of the partition wall cross sections and (B) was the average pore diameter of the partition wall surfaces was 50%. "The partition wall thickness", "the cell density", "the porosity", "the average pore diameter of the partition wall cross sections", "the average pore diameter of the partition wall surfaces" and "the value of the ratio of (B) to (A)" are shown in Table 1. It can be considered that the values shown in Table 1 are the values of the honeycomb catalyst body of the present invention in the non-filled state. "The value of the ratio of (B) to (A)" is a value calculated by "(the value of B)/(the value of A)×100".

The porosity is a value measured with "Auto Pore III 9420 (trade name)" manufactured by Micromeritics Co.

Moreover, "the average pore diameter of the partition wall cross sections" was measured by the following method. First, a honeycomb block of a cube having each side length of 20 mm was cut from the honeycomb structure. Next, pores of the honeycomb block were filled with a resin. Next, the honeycomb block filled with the resin was ground to the vicinities of the partition wall surfaces by rough grinding. Next, by finish grinding, the block was ground to the centers of the partition walls in a thickness direction thereof, and the ground surfaces of the partition walls were mirror-finished. A view field of 1 mm × 1 mm of the mirror-finished surfaces of the partition walls was photographed at a magnification of 100 times by a scanning type electron microscope (SEM). The cross sections of the partition walls were photographed by a scanning type electron microscope "S-3400N (trade name)" manufactured by Hitachi Ltd.

Next, an image of an obtained microphotograph was analyzed, to calculate a diameter of an inscribed circle drawn in each pore in the microphotograph. From the obtained diameter of the inscribed circle, an area of the inscribed circle was obtained, and an average diameter dm was obtained by the above (1). A value of the obtained average diameter dm was "the average pore diameter of the partition wall cross sections".

"The average pore diameter of the partition wall surfaces" was measured by a method similar to the above measuring of "the average pore diameter of the partition wall cross sections" except that the surfaces of the partition walls were photographed.

[Table 1]

| | | Honeycomb structure (non-filled state) | | | | | |
|---|---|---|---|---|---|---|---|
| | | Partition wall thickness | Cell density | Porosity | Ave. pore dia. (A) of partition wall cross sections | Ave. pore dia. (B) of partition wall surfaces | Value of ratio of (B) to (A) |
| | | (mm) | (cells/cm$^2$) | (%) | ($\mu$m) | ($\mu$m) | (%) |
| Example 1 | | 0.1397 | 46.5 | 50 | 20 | 10 | 50 |
| Example 2 | | 0.1397 | 46.5 | 55 | 50 | 28 | 56 |
| Example 3 | | 0.1397 | 46.5 | 65 | 80 | 20 | 25 |
| Example 4 | | 0.1397 | 46.5 | 65 | 120 | 22 | 18 |
| Example 5 | | 0.1397 | 46.5 | 50 | 20 | 10 | 50 |
| Example 6 | | 0.1397 | 46.5 | 50 | 20 | 10 | 50 |
| Example 7 | | 0.1397 | 46.5 | 50 | 20 | 10 | 50 |
| Example 8 | | 0.1397 | 46.5 | 50 | 20 | 10 | 50 |
| Example 9 | | 0.1397 | 46.5 | 50 | 20 | 10 | 50 |
| Example 10 | | 0.1651 | 62.0 | 50 | 20 | 10 | 50 |
| Example 11 | | 0.1143 | 93.0 | 50 | 20 | 10 | 50 |
| Example 12 | | 0.127 | 93.0 | 50 | 20 | 10 | 50 |
| Comparative Example 1 | | 0.1397 | 46.5 | 45 | 20 | 10 | 50 |
| Comparative Example 2 | | 0.1397 | 46.5 | 30 | 20 | 10 | 50 |
| Comparative Example 3 | | 0.1397 | 46.5 | 50 | 15 | 10 | 67 |
| Comparative Example 4 | | 0.1397 | 46.5 | 50 | 10 | 10 | 100 |
| Comparative Example 5 | | 0.1397 | 46.5 | 50 | 20 | 10 | 50 |
| Comparative Example 6 | | 0.1397 | 46.5 | 50 | 20 | 10 | 50 |
| Comparative Example 7 | | 0.1397 | 46.5 | 50 | 20 | 10 | 50 |
| Comparative Example 8 | | 0.1397 | 46.5 | 65 | 80 | 20 | 25 |

Next, an SCR catalyst was loaded on the obtained honeycomb structure, to prepare a honeycomb catalyst body. As the SCR catalyst, a Cu-substituted zeolite was used. As a method of loading the SCR catalyst, an immersion method was used.

In the honeycomb catalyst body of Example 1, a loading amount of the SCR catalyst was 220 g/L. Moreover, a porosity of pores having pore diameters of 3 $\mu$m or larger in the obtained honeycomb catalyst body was 5%. An average pore diameter of partition wall cross sections of the obtained honeycomb catalyst body was 10 $\mu$m. A thickness of an SCR catalyst layer was 35 $\mu$m. "The loading amount of the SCR catalyst", "the porosity of the pores having the pore diameters of 3 $\mu$m or larger", "the average pore diameter of the partition wall cross sections" and "the thickness of the SCR catalyst layer" are shown in Table 2. It can be considered that the values shown in Table 2 are values of the honeycomb catalyst body of the present invention in a filled state. The thickness of the SCR catalyst layer is a thickness of the thinnest portion of the SCR catalyst layer. For example, when the SCR catalyst layer is not formed on all areas of the surfaces of the partition walls, the thickness of the SCR catalyst layer is measured as a thickness of a portion which is not provided with the SCR catalyst layer, and is 0 μm.

"The porosity of the pores having the pore diameters of 3 μm or larger" is a value measured with "Auto Pore III 9420 (trade name)" manufactured by Micromeritics Co.

Moreover, "the average pore diameter of the partition wall cross sections" of the honeycomb catalyst body was measured by a method similar to the measuring of "the average pore diameter of the partition wall cross sections" of the honeycomb structure. Additionally, "the average pore diameter of the partition wall cross sections" of the honeycomb catalyst body is an average pore diameter measured in a state where the pores of the partition walls are filled with the SCR catalyst, i.e., the average pore diameter measured in the filled state.

[Table 2]

| | Honeycomb catalyst body (filled state) | | | |
|---|---|---|---|---|
| | Loading amount of SCR catalyst | Porosity of pores having pore diameters of 3 μm or larger | Ave. pore dia. (A) of partition wall cross sections | Thickness of SCR catalyst layer (thickness of the thinnest portion) |
| | (g/L) | (%) | (μm) | (μm) |
| Example 1 | 220 | 5 | 10 | 35 |
| Example 2 | 220 | 10 | 15 | 30 |
| Example 3 | 220 | 15 | 20 | 25 |
| Example 4 | 220 | 20 | 20 | 20 |
| Example 5 | 220 | 5 | 10 | 35 |
| Example 6 | 220 | 10 | 10 | 30 |
| Example 7 | 220 | 15 | 10 | 35 |
| Example 8 | 220 | 20 | 10 | 40 |
| Example 9 | 220 | 30 | 10 | 43 |
| Example 10 | 220 | 5 | 10 | 25 |
| Example 11 | 220 | 5 | 10 | 25 |
| Example 12 | 220 | 5 | 10 | 25 |
| Comparative Example 1 | 220 | 5 | 10 | 45 |
| Comparative Example 2 | 220 | 5 | 10 | 50 |
| Comparative Example 3 | 220 | 5 | 10 | 80 |
| Comparative Example 4 | 220 | 5 | 10 | 80 |
| Comparative Example 5 | 220 | 45 | 10 | 45 |
| Comparative Example 6 | 220 | 40 | 10 | 45 |
| Comparative Example 7 | 220 | 5 | 10 | 0 |
| Comparative Example 8 | 220 | 15 | 20 | 0 |

Next, a pressure loss and a purification ratio of the obtained honeycomb catalyst body were evaluated by the following method. Moreover, from the obtained evaluation results, general evaluation of the honeycomb catalyst body was performed. The results are shown in Table 3.

[Pressure Loss]

Through the honeycomb catalyst body, air was allowed to flow at a flow velocity of 10 $m^3$/min. on room temperature conditions, and a pressure on an inlet side of the honeycomb catalyst body and a pressure on an outlet side thereof were measured. A pressure difference between the pressure on the inlet side and the pressure on the outlet side was a pressure loss (the pressure loss (kPa)). A case where the pressure loss (kPa) was smaller than 8 kPa was evaluated as "OK (passable)". A case where the pressure loss (kPa) was 8 kPa or larger was evaluated as "NG (non-passable)".

[Purification Ratio]

The prepared honeycomb catalyst body was mounted on an exhaust system of a vehicle on which a gasoline engine of 2 liters displacement was mounted. A regulated operation mode (LA-4) of Federal Regulations (FTP) was performed, to measure hydrocarbon emissions. A purification ratio was calculated from a ratio between the measurement of the emissions and the measurement of emissions without any catalyst bodies. A case where the purification ratio (%) was 90% or larger was evaluated as "OK (passable)". A case where the purification ratio (%) was smaller than 90% was evaluated as "NG (non-passable)".

[General Evaluation]

When both the evaluation results were "OK (passable)" in the evaluations of the pressure loss and the purification ratio, the general evaluation was "OK (passable)". When at least one of the evaluation results was "NG (non-passable)" in the evaluations of the pressure loss and the purification ratio, the general evaluation was "NG (non-passable)".
[Table 3]

| | Pressure loss | | Purification ratio | | General evaluation |
|---|---|---|---|---|---|
| | (kPa) | | (%) | | |
| Example 1 | 4.55 | OK | 97 | OK | OK |
| Example 2 | 4.55 | OK | 97.5 | OK | OK |
| Example 3 | 4.5 | OK | 98 | OK | OK |
| Example 4 | 4.55 | OK | 98 | OK | OK |
| Example 5 | 4.55 | OK | 97 | OK | OK |
| Example 6 | 4.6 | OK | 97 | OK | OK |
| Example 7 | 4.65 | OK | 97 | OK | OK |
| Example 8 | 4.7 | OK | 97 | OK | OK |
| Example 9 | 4.8 | OK | 97 | OK | OK |
| Example 10 | 4.55 | OK | 98.5 | OK | OK |
| Example 11 | 4.55 | OK | 99 | OK | OK |
| Example 12 | 4.55 | OK | 99.3 | OK | OK |
| Com parative Example 1 | 8 | NG | 95 | OK | NG |
| Comparative Example 2 | 8.8 | NG | 96 | OK | NG |
| Comparative Example 3 | 9.5 | NG | 88 | NG | NG |
| Comparative Example 4 | 9.5 | NG | 86 | NG | NG |
| Comparative Example 5 | 4.95 | OK | 85 | NG | NG |

(continued)

| | Pressure loss | | Purification ratio | | General evaluation |
|---|---|---|---|---|---|
| | (kPa) | | (%) | | |
| Comparative Example 6 | 4.9 | OK | 80 | NG | NG |
| Comparative Example 7 | 4.55 | OK | 87 | NG | NG |
| Comparative Example 8 | 4.5 | OK | 88 | NG | NG |

(Examples 2 to 12 and Comparative Examples 1 to 8)

In Examples 2 to 12 and Comparative Examples 1 to 8, first, honeycomb structures shown in Table 1 were prepared. Next, an SCR catalyst was loaded on each of the obtained honeycomb structures, to prepare a honeycomb catalyst body. A loading amount of the SCR catalyst of the honeycomb catalyst body of each of Examples 2 to 12 and Comparative Examples 1 to 8 was 220 g/L in the same manner as in Example 1. In Examples 2 to 12 and Comparative Examples 1 to 8, "a porosity of pores having pore diameters of 3 $\mu$m or larger", "an average pore diameter of partition wall cross sections" and "a thickness of a SCR catalyst layer" were obtained as shown in Table 2. In Comparative Examples 7 and 8, the SCR catalyst layer was not formed on all areas of the surfaces of the partition walls, and the SCR catalyst layer was formed on part of the surfaces of the partition walls. Therefore, in Comparative Examples 7 and 8, the thickness of the SCR catalyst layer (the thickness of the thinnest portion) was 0 $\mu$m.

In Examples 1 to 12 and Comparative Examples 1 to 8, a catalyst slurry viscosity (mPa•sec) and particle diameters ($\mu$m) of the catalyst were as follows. The catalyst slurry viscosity in Examples 1 to 12 and Comparative Examples 1 to 6 was 6 mPa•sec. The catalyst slurry viscosity in Comparative Example 7 was 15 mPa•sec. The catalyst slurry viscosity in Comparative Example 8 was 20 mPa•sec. The particle diameters of the catalyst in Examples 1 and 5 and Comparative Examples 5 to 8 were 7 $\mu$m. The particle diameters of the catalyst in Examples 2 and 6 were 6 $\mu$m. The particle diameters of the catalyst in Examples 3, 4 and 9 to 12 and Comparative Examples 3 and 4 were 5 $\mu$m. The particle diameters of the catalyst in Examples 7 and 8 and Comparative Example 1 were 8 $\mu$m. The particle diameters of the catalyst in Comparative Example 2 were 10 $\mu$m.

(Conclusion)

As shown in Table 3, the honeycomb catalyst bodies of Examples 1 to 12 showed suitable results in all the evaluations. On the other hand, in the honeycomb catalyst bodies of Comparative Examples 1 and 2, the porosity of the honeycomb structure in the non-filled state was excessively low, and hence the pressure loss of the honeycomb catalyst body was very high. In the honeycomb catalyst bodies of Comparative Examples 3 and 4, the porosity of the partition wall cross sections of the honeycomb structure in the non-filled state was excessively small, and hence filling properties of the pores with the SCR catalyst deteriorated. Therefore, the thickness of the SCR catalyst layer on the partition wall surfaces was excessively large, and hydraulic diameters of cells were excessively small. In consequence, the honeycomb catalyst bodies of Comparative Examples 3 and 4 had a high pressure loss. Moreover, in the honeycomb catalyst bodies of Comparative Examples 3 and 4, gas diffusion was insufficient, and hence the purification ratio was low.

Moreover, the honeycomb catalyst bodies of Comparative Examples 5 and 6 had a low purification ratio. In the honeycomb catalyst bodies of Comparative Examples 5 and 6, "the porosity of the pores having the pore diameters of 3 $\mu$m or larger" was high. That is, in the honeycomb catalyst bodies of Comparative Examples 5 and 6, a very large amount of remaining voids having pore diameters of 3 $\mu$m or larger were present in the pores of the partition walls. It has been considered that in the remaining voids, a water formed by the aggregation of water vapor in an exhaust gas accumulated and the purification ratio lowered.

Furthermore, in the honeycomb catalyst bodies of Comparative Examples 7 and 8, the purification ratio was low. In the honeycomb catalyst bodies of Comparative Examples 7 and 8, the thickness of the thinnest portion of the SCR catalyst layer was 0 $\mu$m. In consequence, the water penetrated the pores of the partition walls (specifically, the remaining voids) from the portion which was not provided with the SCR catalyst layer. It has been considered that the water formed by the aggregation of the water vapor in the exhaust gas accumulated in the remaining voids of the pores in this manner, and the purification ratio lowered.

A honeycomb catalyst body of the present invention can be used to purify an exhaust gas.

Description of Reference Numerals

1: partition wall, 2: cell, 3: outer peripheral wall, 11: one end surface, 12: the other end surface, 15: pore, 50: honeycomb structure, 60: SCR catalyst, 61: layer (SCR catalyst layer), 100: honeycomb catalyst body, and T: thickness of SCR catalyst layer

## Claims

1. A honeycomb catalyst body comprising:

    a tubular honeycomb structure including porous partition walls to divide and form a plurality of cells which extend from one end surface to the other end surface and become through channels of a fluid; and
    an SCR catalyst with which pores of the partition walls are filled and which is disposed to coat all areas of the surfaces of the partition walls and which selectively reduces components to be purified,
    wherein a porosity of the partition walls in a state where the pores are not filled with the SCR catalyst is 50% or larger,
    an average pore diameter of the partition walls which is obtained from a microphotograph obtained by photographing cross sections of the partition walls cut vertically to a thickness direction is 20 $\mu$m or larger at the centers of the partition walls in the thickness direction thereof in the state where the pores are not filled with the SCR catalyst,
    a porosity of the pores of the partition walls having pore diameters of 3 $\mu$m or larger in a state where the pores are filled with the SCR catalyst is 30% or smaller, and
    a thickness of a layer formed by the SCR catalyst disposed to coat all the areas of the surfaces of the partition walls is 20 $\mu$m or larger.

2. The honeycomb catalyst body according to claim 1,
    wherein a value of a ratio of an average pore diameter of the partition walls which is obtained from a microphotograph obtained by photographing the surfaces of the partition walls in the state where the pores are not filled with the SCR catalyst to the average pore diameter of the partition walls which is obtained from the microphotograph obtained by photographing the cross sections of the partition walls cut vertically to the thickness direction at the centers of the partition walls in the thickness direction thereof in the state where the pores are not filled with the SCR catalyst is 60% or smaller.

3. The honeycomb catalyst body according to claim 1 or 2,
    wherein a shape of the pores is such a substantially spherical shape that open areas of the pores in the cross sections of the partition walls cut vertically to the thickness direction of the partition walls gradually increase and continuously widen, and then gradually decrease and continuously narrow from one surface of each of the partition walls toward the other surface thereof.

4. The honeycomb catalyst body according to any one of claims 1 to 3,
    wherein the average pore diameter of the partition walls which is obtained from the microphotograph obtained by photographing the cross sections of the partition walls cut vertically to the thickness direction is 15 $\mu$m or smaller at the centers of the partition walls in the thickness direction thereof in the state where the pores are filled with the SCR catalyst.

5. The honeycomb catalyst body according to any one of claims 1 to 4,
    wherein the porosity of the pores of the partition walls having the pore diameters of 3 $\mu$m or larger in the state where the pores are filled with the SCR catalyst is 15% or smaller.

## Patentansprüche

1. Wabenkatalysatorkörper, umfassend:

    eine rohrförmige Wabenstruktur, die poröse Trennwände umfasst, um eine Vielzahl von Zellen zu unterteilen und auszubilden, die sich von einer Endfläche zur anderen Endfläche erstrecken und zu Durchgangskanälen eines Fluids werden; und
    einen SCR-Katalysator, mit dem Poren der Trennwände gefüllt sind und der angeordnet ist, um alle Bereiche der Oberflächen der Trennwände zu beschichten und der gegebenenfalls zu reinigende Komponenten reduziert,

worin die Porosität der Trennwände in einem Zustand, in dem die Poren nicht mit dem SCR-Katalysator gefüllt sind, 50 % oder größer ist,

worin der mittlere Porendurchmesser der Trennwände, der von einer Mikrofotografie durch Fotografieren von Querschnitten der Trennwände vertikal zu einer Dickenrichtung erhalten wird, in der Mitte der Trennwände in deren Dickenrichtung in dem Zustand, in dem die Poren nicht mit dem SCR-Katalysator gefüllt sind, 20 $\mu$m oder größer ist,

worin die Porosität der Poren der Trennwände mit Porendurchmessern von 3 $\mu$m oder größer in einem Zustand, in dem die Poren mit dem SCR-Katalysator gefüllt sind, 30 % oder weniger beträgt, und

worin die Dicke einer Schicht, die von dem SCR-Katalysator ausgebildet ist, der angeordnet ist, um alle Bereiche der Oberflächen der Trennwände zu beschichten, 20 $\mu$m oder größer ist.

2. Wabenkatalysatorkörper nach Anspruch 1,
worin der Wert eines Verhältnisses zwischen einem mittleren Porendurchmesser der Trennwände, der von einer Mikrofotografie durch Fotografieren der Trennwände in dem Zustand, in dem die Poren nicht mit dem SCR-Katalysator gefüllt sind, und dem mittleren Porendurchmesser der Trennwände, der von der Mikrofotografie durch Fotografieren von Querschnitten der Trennwände vertikal zu einer Dickenrichtung erhalten wird, in der Mitte der Trennwände in deren Dickenrichtung in dem Zustand, in dem die Poren nicht mit dem SCR-Katalysator gefüllt sind, 60 % oder weniger beträgt.

3. Wabenkatalysatorkörper nach Anspruch 1 oder 2,
worin die Form der Poren eine im Wesentlichen kugelförmige Form ist, so dass offene Bereiche der Poren in den Querschnitten der Trennwände vertikal zur Dickenrichtung der Trennwände schrittweise zunehmen und kontinuierlich größer werden, und dann von einer Fläche jeder der Trennwände in Richtung ihrer anderen Fläche schrittweise abnehmen und kontinuierlich kleiner werden.

4. Wabenkatalysatorkörper nach einem der Ansprüche 1 bis 3.
worin der mittlere Porendurchmesser der Trennwände, der von einer Mikrofotografie durch Fotografieren von Querschnitten der Trennwände vertikal zu einer Dickenrichtung erhalten wird, in der Mitte der Trennwände in deren Dickenrichtung in dem Zustand, in dem die Poren mit dem SCR-Katalysator gefüllt sind, 15 $\mu$m oder kleiner ist.

5. Wabenkatalysatorkörper nach einem der Ansprüche 1 bis 4,
worin die Porosität der Poren der Trennwände mit Porendurchmessern von 3 $\mu$m oder größer in dem Zustand, in dem die Poren mit dem SCR-Katalysator gefüllt sind, 15 % oder kleiner ist.

**Revendications**

1. Corps de catalyseur en nid d'abeilles comprenant :

une structure de nid d'abeilles tubulaire comprenant des parois de séparation poreuses pour séparer et former une pluralité de cellules qui s'étendent d'une surface d'extrémité à l'autre surface d'extrémité et qui deviennent des canaux traversants d'un fluide ; et

un catalyseur SCR avec lequel les pores des parois de séparation sont remplis et qui est disposé de manière à recouvrir toutes les aires des surfaces des parois de séparation et qui réduit de manière sélective les composants à purifier,

dans lequel une porosité des parois de séparation dans un état dans lequel les pores ne sont pas remplis avec le catalyseur SCR est de 50 % ou plus,

un diamètre de pore moyen des parois de séparation qui est obtenu à partir d'une microphotographie obtenue en photographiant les sections transversales des parois de séparation coupées verticalement par rapport à une direction d'épaisseur est de 20 $\mu$m ou plus aux centres des parois de séparation dans la direction d'épaisseur de celles-ci dans l'état dans lequel les pores ne sont pas remplis avec le catalyseur SCR,

une porosité des pores des parois de séparation ayant des diamètres de pore de 3 $\mu$m ou plus dans un état dans lequel les pores sont remplis avec le catalyseur SCR est de 30 % ou moins, et

une épaisseur d'une couche formée par le catalyseur SCR disposé de manière à recouvrir toutes les aires des surfaces des parois de séparation est de 20 $\mu$m ou plus.

2. Corps de catalyseur en nid d'abeilles selon la revendication 1,
dans lequel une valeur d'un rapport entre un diamètre de pore moyen des parois de séparation qui est obtenu à partir d'une microphotographie obtenue en photographiant les surfaces des parois de séparation dans l'état dans lequel les pores ne sont pas remplis avec le catalyseur SCR et le diamètre de pore moyen des parois de séparation qui est obtenu à partir de la microphotographie obtenue en photographiant les sections transversales des parois de séparation coupées verticalement par rapport à la direction d'épaisseur aux centres des parois de séparation dans la direction d'épaisseur de celles-ci dans l'état dans lequel les pores ne sont pas remplis avec le catalyseur SCR est de 60 % ou moins.

3. Corps de catalyseur en nid d'abeilles selon la revendication 1 ou 2,
dans lequel une forme des pores est une forme sensiblement sphérique telle que les zones ouvertes des pores dans les sections transversales des parois de séparation coupées verticalement par rapport à la direction d'épaisseur des parois de séparation augmentent graduellement et s'élargissent continûment, et diminuent ensuite graduellement et se rétrécissent continûment d'une surface de chacune des parois de séparation vers l'autre surface de celles-ci.

4. Corps de catalyseur en nid d'abeilles selon l'une quelconque des revendications 1 à 3,
dans lequel le diamètre de pore moyen des parois de séparation qui est obtenu à partir de la microphotographie obtenue en photographiant les sections transversales des parois de séparation coupées verticalement par rapport à la direction d'épaisseur est de 15 $\mu$m ou moins aux centres des parois de séparation dans la direction d'épaisseur de celles-ci dans l'état dans lequel les pores sont remplis avec le catalyseur SCR.

5. Corps de catalyseur en nid d'abeilles selon l'une quelconque des revendications 1 à 4,
dans lequel la porosité des pores des parois de séparation ayant les diamètres de pore de 3 $\mu$m ou plus dans l'état dans lequel les pores sont remplis avec le catalyseur SCR est de 15 % ou moins.

FIG.1

100

11

60

1

2

50

3

12

FIG.2

FIG.3                                        1 0 0

FIG.4                                        1 0 0

FIG.5

100

FIG.6

1

100

50

60

15

15

60

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010516466 T